# EUROPEAN PATENT APPLICATION

(11) **EP 2 782 049 A2**
(43) Date of publication of application: **24.09.2014**
(21) Application number: 14159951.4
(22) Date of filing: 14.03.2014
(51) Int. Cl.: G06K 9/62

(54) **Robot system and image processing method**

(30) Priority: 19.03.2013 JP 2013056649
(71) Applicant: Kabushiki Kaisha Yaskawa Denki, Kitakyushu-shi, Fukuoka 806-0004 (JP)
(72) Inventor: Ikenaga, Takahisa, Kitakyushu-shi, Fukuoka 806-0004 (JP); Murayama, Takuya, Kitakyushu-shi, Fukuoka 806-0004 (JP); Nihara, Hidefumi, Kitakyushu-shi, Fukuoka 806-0004 (JP)
(74) Representative: Viering, Jentschura & Partner Patent- und Rechtsanwälte

(57) **Abstract**

A robot system (1) includes: a touchscreen panel (22); and an image processing apparatus (U1) configured to recognize a workpiece in an image of the workpiece (W) acquired by photography, in accordance with a registered image recognition program. The image processing apparatus includes: a storage unit (26) configured to store a base program serving as the image recognition program by inputting a plurality of parameters regarding the workpiece, a workpiece registration guiding portion (27) configured to display an input screen to prompt input of the parameters on the touchscreen panel and acquire the parameters via the touchscreen panel, and a registration portion configured to build and register the image recognition program by applying the parameters acquired by the workpiece registration guiding portion to the base program in the storage unit.

## Description

### BACKGROUND

### 1. Technical Field

This disclosure relates to a robot system and an image processing method.

### 2. Related Art

A robot system in practical use photographs a workpiece with a camera, acquires position information and similar information of the workpiece based on the photographed image, and makes a robot arm operate based on the acquired position information and similar information is in practical use. For example, JP-A-2010-243317 discloses a robot system that includes a robot arm and a camera that is mounted on the robot arm for photographing a workpiece.

An image recognition program for recognizing a workpiece within a photographed image is preliminary registered with the above-described robot system in order to acquire position information and similar information of the workpiece. Registering an appropriate image recognition program is a difficult task that is based on an advanced expertise about image recognition.

One object of this disclosure is to provide a robot system that facilitates registration of an image recognition program for a workpiece.

### SUMMARY

A robot system includes: a touchscreen panel; and an image processing apparatus configured to recognize a workpiece in an image of the workpiece acquired by photography, in accordance with a registered image recognition program. The image processing apparatus includes: a storage unit configured to store a base program serving as the image recognition program by inputting a plurality of parameters regarding the workpiece, a workpiece registration guiding portion configured to display an input screen to prompt input of the parameters on the touchscreen panel and acquire the parameters via the touchscreen panel, and a registration portion configured to build and register the image recognition program by applying the parameters acquired by the workpiece registration guiding portion to the base program in the storage unit.

### BRIEF DESCRIPTION OF DRAWINGS

Fig. 1 is a pattern diagram illustrating a schematic configuration of a robot system according to an embodiment;
Fig. 2 is a block diagram illustrating a functional configuration of an image processing apparatus;
Fig. 3 is a flow chart illustrating a registration procedure of an image recognition program;
Fig. 4 is a view illustrating a menu screen for image processing;
Fig. 5 is a view illustrating an input screen for a program number;
Fig. 6 is a view illustrating a state where a program number is being input;
Fig. 7 is a view illustrating an input screen for an external shape type of a workpiece;
Fig. 8 is a view illustrating an input screen for an external shape and a size of a workpiece;
Fig. 9 is a view illustrating a state where a workpiece-surrounding graphic shape is being drawn;
Fig. 10 is a view illustrating a state immediately before a workpiece-surrounding graphic shape is determined;
Fig. 11 is a view illustrating an input screen for a shape type of a feature portion;
Fig. 12 is a view illustrating an input screen for a shape, a size, and a position of a feature portion;
Fig. 13 is a view illustrating an input screen for a position of a reference point; and
Fig. 14 is a view illustrating a screen indicating that an input operation has been completed.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

A robot system according to one embodiment of the present disclosure (this system) includes: a touchscreen panel; and an image processing apparatus configured to recognize a workpiece in an image of the workpiece acquired by photography, in accordance with a registered image recognition program. The image processing apparatus includes: a storage unit configured to store a base program serving as the image recognition program by inputting a plurality of parameters regarding the workpiece, a workpiece registration guiding portion configured to display an input screen to prompt input of the parameters on the touchscreen panel and acquire the parameters via the touchscreen panel, and a registration portion configured to build and register the image recognition program by applying the parameters acquired by the workpiece registration guiding portion to the base program in the storage unit.

This system facilitates registration of an image recognition program for a workpiece.

Hereinafter, a detailed description will be given of one embodiment of this disclosure with reference to the accompanying drawings. In the description, the element that is substantially the same or has substantially the same function will be provided with the same reference numeral, and the duplicated description will be omitted.

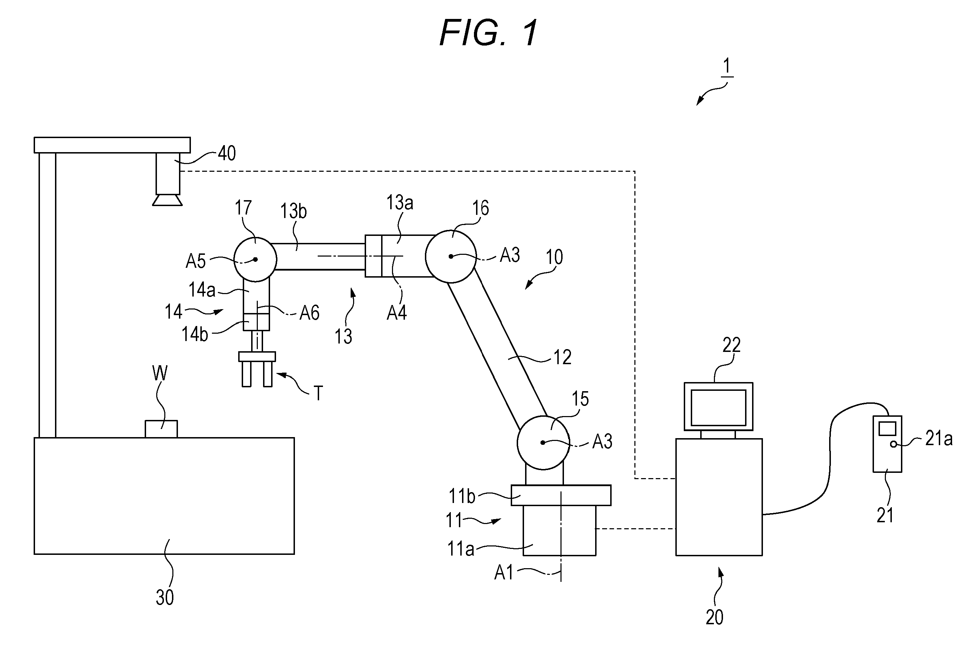

As illustrated in Fig. 1, a robot system 1 according to the embodiment includes a robot arm 10, a robot controller 20, a workbench 30, and a camera 40.

The robot arm 10 includes a base portion 11, two arm portions 12 and 13, one wrist portion 14, and three joints 15, 16, and 17. The respective joints 15, 16, and 17 couple the arm portion 12, the arm portion 13, and the wrist portion 14 in series to the base portion 11. The base portion 11 includes a base 11a mounted on a floor surface, and a swivel base 11b disposed on the base 11a. The base 11a incorporates an actuator that turns the swivel base 11b around a perpendicular axis (the S-axis) A1.

The joint (the L-axis joint) 15 couples the arm portion (a lower arm portion) 12 and an upper part of the swivel base 11b together. The L-axis joint 15 incorporates an actuator that swings the lower arm portion 12 around a horizontal axis (the L-axis) A2. The joint (the U-axis joint) 16 couples the arm portion (a forearm portion) 13 and the lower arm portion 12 together. The U-axis joint 16 incorporates an actuator that swings the forearm portion 13 around an axis (the U-axis) A3 parallel to the L-axis A2. The joint (the B-axis joint) 17 couples the wrist portion 14 and the forearm portion 13 together. The B-axis joint 17 incorporates an actuator that swings the wrist portion 14 around an axis (the B-axis) A5, which is perpendicular to a central axis A4 of the forearm portion 13.

The forearm portion 13 includes forearm links 13a and 13b that continue in series. The first forearm link 13a at the U-axis joint 16 side incorporates an actuator that turns the second forearm link 13b at the B-axis joint 17 side around the central axis (the R-axis) A4 of the forearm portion 13. The wrist portion 14 includes a wrist link 14a and a mounting flange 14b. The wrist link 14a is coupled to the B-axis joint 17. The mounting flange 14b is coupled to a tip side of the wrist link 14a. The wrist link 14a incorporates an actuator that turns the mounting flange 14b around the central axis (the T-axis) A6 of the wrist portion 14. On the mounting flange 14b, various tools T for causing the robot arm 10 to perform a desired operation are mounted. One of the tools T is, for example, a robot hand. The above-described configuration of the robot arm 10 and the arrangement of individual actuators are exemplary. The configuration of the robot arm 10 and the arrangement of respective actuators are not limited to the above-described configuration and arrangement.

The workbench 30 supports a workpiece W as a working target of the robot arm 10. The camera 40 incorporates, for example, an imaging element such as a CCD. The camera 40 is mounted above the workbench 30. The camera 40 photographs the workbench 30 below and outputs an image (image data) as an electrical signal.

The robot controller 20 controls the actuators of the robot arm 10 in order to allow the robot arm 10 to perform various operations on the workpiece W. Additionally, the robot controller 20 acquires the image from the camera 40, and recognizes the workpiece W within the image. That is, the robot controller 20 functions as an image processing apparatus U1. The robot controller 20 acquires the position and posture information of the workpiece W within the image by recognizing process of the workpiece W within the image. The robot controller 20 specifies the position and posture information of the workpiece W with reference to the robot arm 10, based on the position and posture information of the workpiece W within the image. The robot controller 20 controls the robot arm 10 based on the specified information.

A programming pendant (PP) 21 and a touchscreen panel 22 are each coupled to the robot controller 20 via a cable. That is, the robot system 1 further includes the PP 21 and the touchscreen panel 22. The PP 21 is an input device for a user to teach how the robot arm 10 operates. The PP 21 includes a switch 21a. The switch 21a switches the robot arm 10 between an operation allowed state and an operation prohibited state. The switch 21a may be, for example, so-called an emergency stop switch that interrupts power supply to the actuators of the robot arm 10. That is, pressing the switch 21a while the robot arm 10 is in the operation allowed state interrupts power supply to the actuators. As a result, the robot arm 10 is put into the operation prohibited state. The touchscreen panel 22 is an input device for a user to make various settings regarding image processing executed by the robot controller 20 as an image processing apparatus U1.

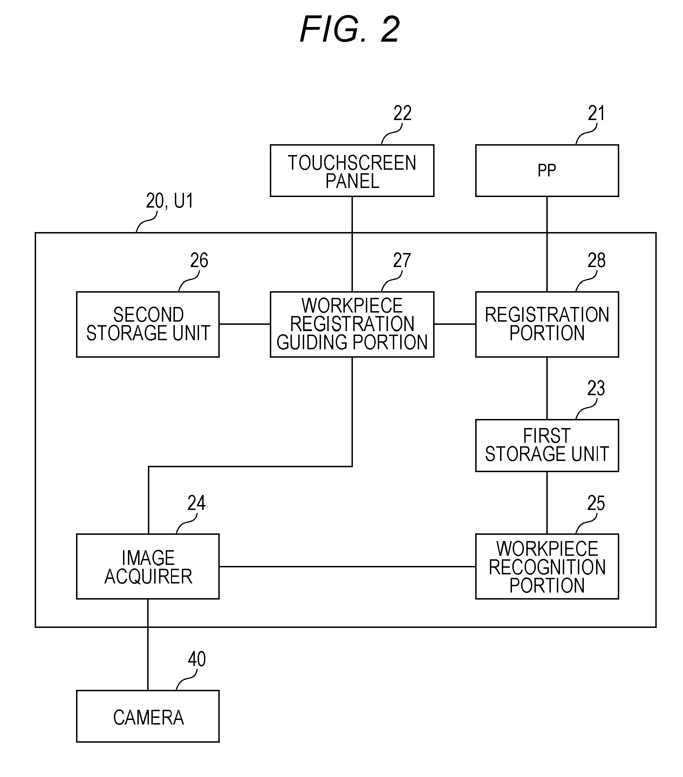

As illustrated in Fig. 2, the robot controller 20 as an image processing apparatus U1 includes a first storage unit 23 and a workpiece recognition portion 25. The first storage unit 23 stores a program (hereinafter referred to as an "image recognition program") for executing image recognition of the workpiece W. That is, the image recognition program regarding the workpiece W is registered in the first storage unit 23. An image acquirer 24 acquires an image from the camera 40. The workpiece recognition portion 25 executes image processing in accordance with the program stored in the first storage unit 23. This allows the workpiece recognition portion 25 to recognize the workpiece W within the image acquired by the image acquirer 24.

When adapting the robot arm 10 to an operation on a new workpiece W, an image recognition program for the new workpiece W is registered in the first storage unit 23. To execute this registration process, the robot controller 20 as an image processing apparatus U1 further includes a second storage unit 26, a workpiece registration guiding portion 27, and a registration portion 28.

The second storage unit 26 stores a base program that serves as an image recognition program when a plurality of parameters regarding the workpiece W is input. The plurality of parameters regarding the workpiece W includes, for example, an external shape and size of the workpiece W, a shape and size of a feature portion of the workpiece W, a position of the feature portion within the workpiece W, and a position of a reference point within the workpiece W. The feature portion is a feature in appearance that can be used to specify a direction of a workpiece W. The reference point is a point that serves as a reference when the robot arm 10 operates on the workpiece W. The reference point is used to specify a portion of the workpiece W gripped by the robot arm 10.

The workpiece registration guiding portion 27 displays a plurality of input screens on the touchscreen panel 22 one by one. These input screens prompt input of the plurality of parameters described above. Additionally, the workpiece registration guiding portion 27 displays a next input screen (switches input screens) every time the above parameter is input on one of the input screens. A user is prompted by the input screens to input all the parameters on the touchscreen panel 22. The workpiece registration guiding portion 27 sequentially acquires the input parameters.

The registration portion 28 builds an image recognition program by applying the above parameters acquired by the workpiece registration guiding portion 27 to the base program stored in the second storage unit 26. The registration portion 28 registers the image recognition program in the first storage unit 23.

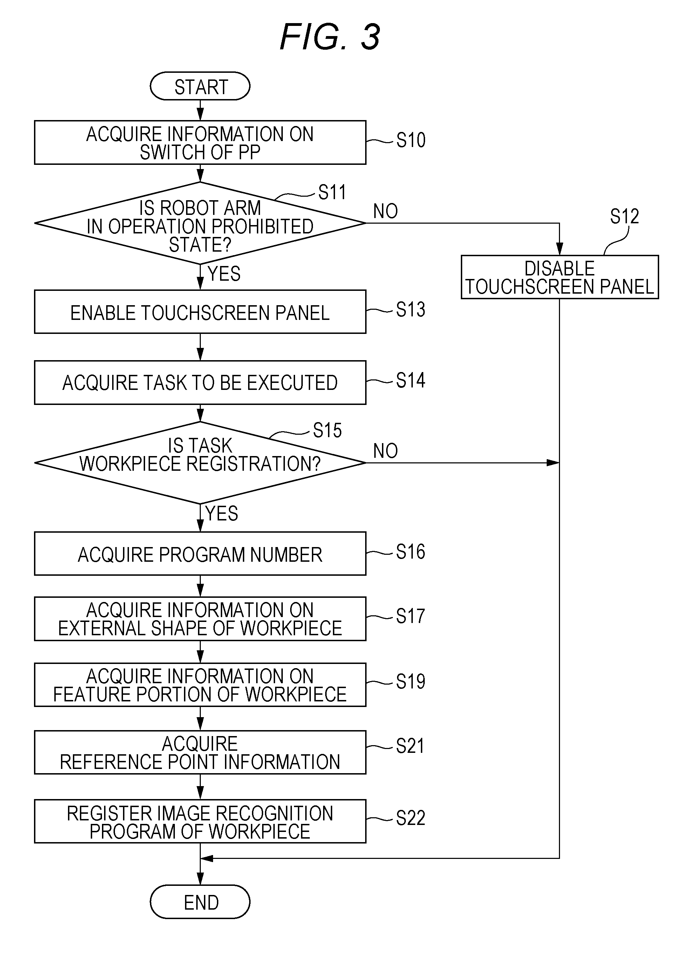

Now a description will be given of a workpiece registration process executed by the robot controller 20 as an image processing apparatus U1. In advance of the workpiece registration process, the workpiece W is set on the workbench 30 (see Fig. 1). As illustrated in Fig. 3, the image processing apparatus U1 first acquires a state of the switch 21a of the PP 21 (S10). The image processing apparatus U1 determines whether or not the robot arm 10 is in the operation prohibited state (S11).

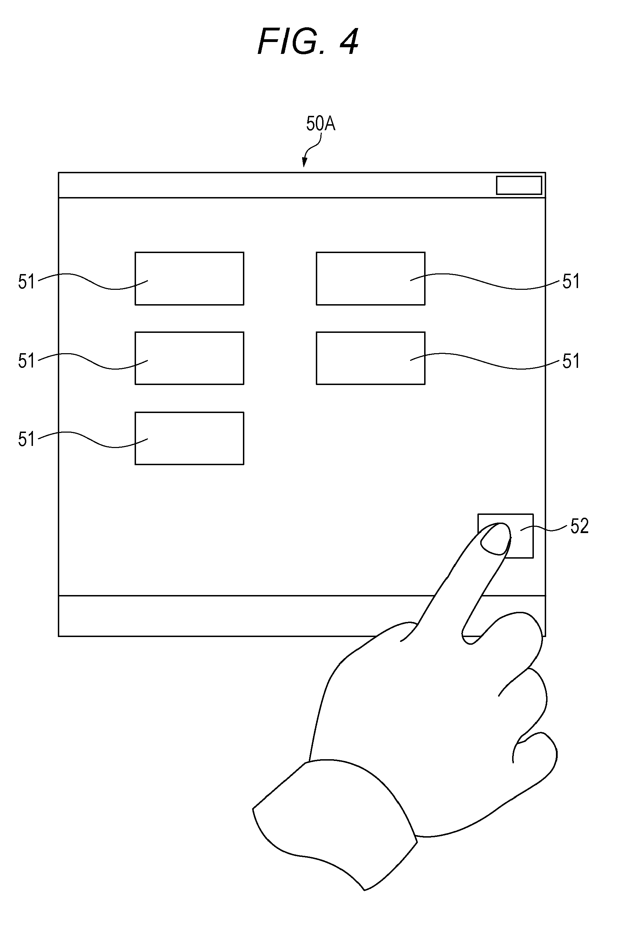

If the robot arm 10 is not in the operation prohibited state, the image processing apparatus U1 disables the touchscreen panel 22 (S12) and terminates the workpiece registration process. If the robot arm 10 is in the operation prohibited state, the image processing apparatus U1 enables the touchscreen panel 22 (S13) and acquires a task to be executed (S 14). When acquiring the task to be executed, the workpiece registration guiding portion 27 displays a menu screen 50A, which is illustrated in Fig. 4, on the touchscreen panel 22. The menu screen 50A contains a plurality of menu selection buttons 51 and a workpiece registration button 52.

Each of the menu selection buttons 51 is assigned various tasks to be executed other than the workpiece registration. Examples of the tasks assigned to the menu selection buttons 51 include an automatic operation mode, a manual operation mode, and a state monitor. In the automatic operation mode, the workpiece W is automatically recognized in association with control of the robot arm 10. In the manual operation mode, the workpiece W is recognized in response to an instruction input by a user. In a state monitor, information indicative of a recognition state of the workpiece W is displayed on the touchscreen panel 22. The task to be executed assigned to the workpiece registration button 52 is workpiece registration. If the user touches the workpiece registration button 52, the image processing apparatus U1 executes workpiece registration.

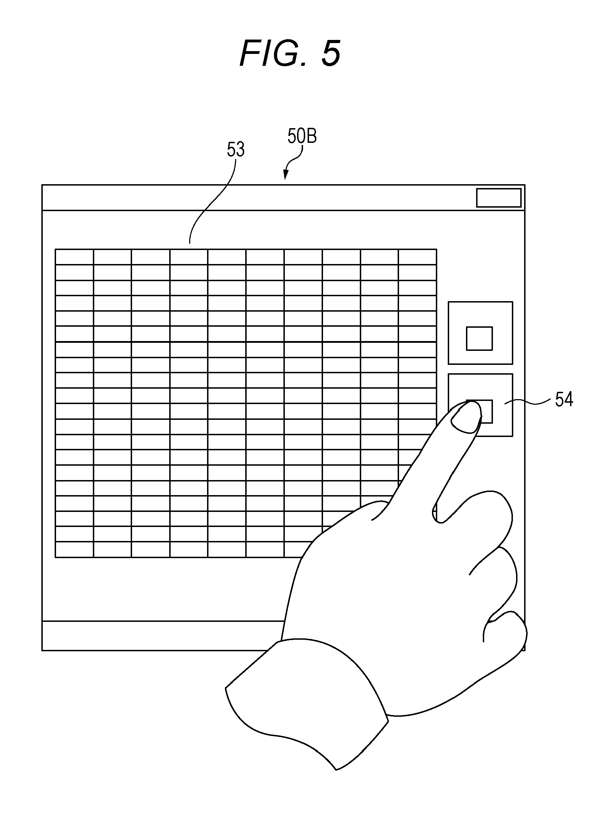

The image processing apparatus U1 then determines whether or not the acquired task is the workpiece registration, as illustrated in Fig. 3. If the task is not the workpiece registration, the image processing apparatus U1 terminates the workpiece registration process. If the task is the workpiece registration, the image processing apparatus U1 acquires a program number from the touchscreen panel 22 (S16). When acquiring the program number, the workpiece registration guiding portion 27 displays an input screen 50B, which is illustrated in Fig. 5, on the touchscreen panel 22.

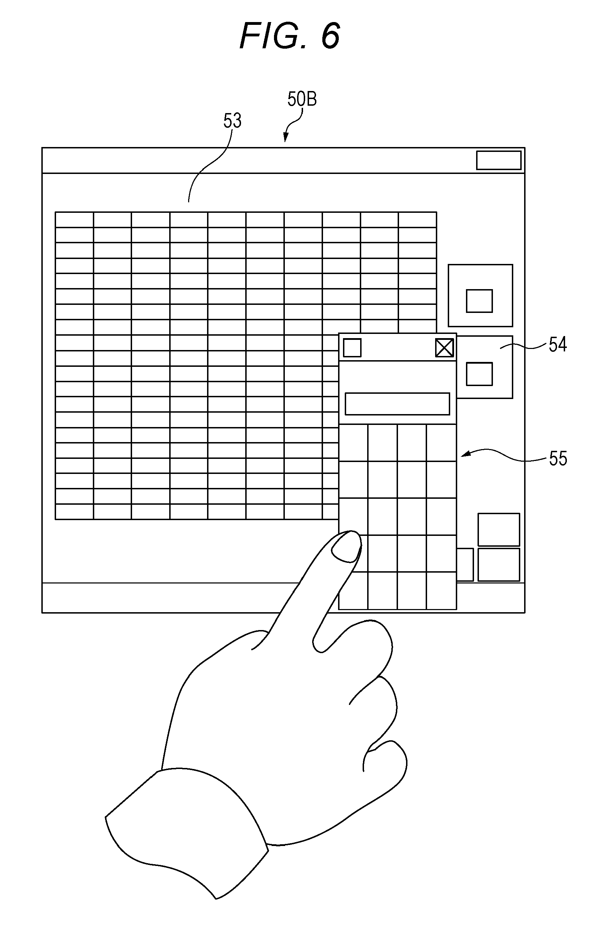

The input screen 50B contains a number list 53 and a number input button 54. The number list 53 lists a registered program number. As illustrated in Fig. 6, when a user touches the number input button 54, a numeric keypad 55 will be displayed next to the number input button 54. The user can use the numeric keypad 55 to input a program number.

The user is prompted by the number list 53, the number input button 54, and the numeric keypad 55 to input the program number. This allows the workpiece registration guiding portion 27 to acquire the number. The workpiece registration guiding portion 27 may highlight the number input button 54 to prompt an input operation to the input screen 50B.

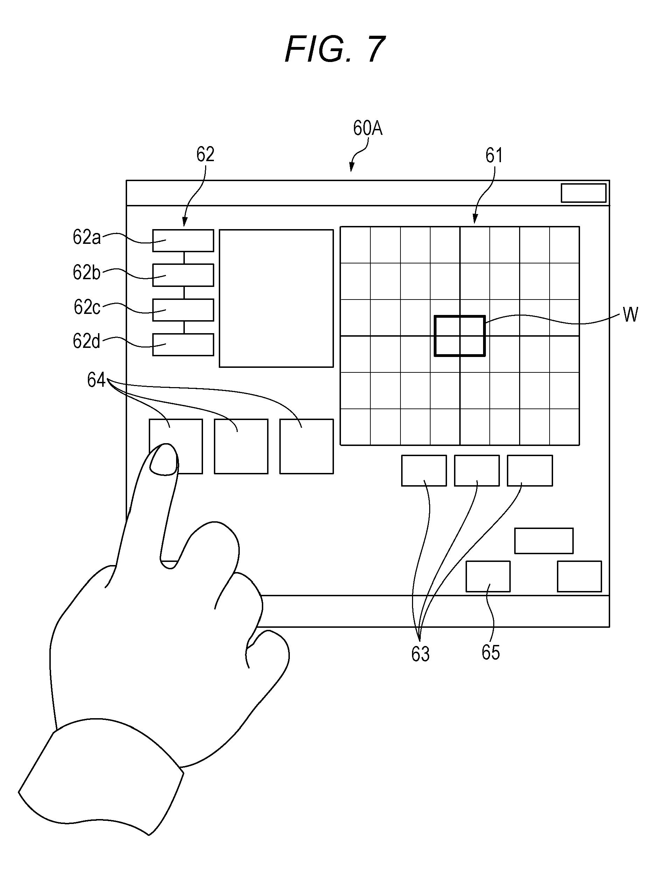

The image processing apparatus U1 then acquires external-shape information of the workpiece W, as illustrated in Fig. 3 (S17). When acquiring the external-shape information of the workpiece W, the workpiece registration guiding portion 27 displays an input screen 60A, which is illustrated on Fig. 7, on the touchscreen panel 22.

The input screen 60A is a screen for inputting a type of the external-shape of the workpiece W. The input screen 60A contains a workpiece display section 61, a flow display section 62, a zoom button 63, a plurality of shape selection buttons 64 and, a determination button 65. The workpiece display section 61 displays an image acquired by the image acquirer 24. As described above, the workpiece W is set on the workbench 30. Thus, the workpiece display section 61 displays the workpiece W. The zoom button 63 is a button for resizing the image displayed on the workpiece display section 61.

The flow display section 62 includes a plurality of display frames 62a to 62d that indicate a parameter input and coupled in series. The display frame 62a corresponds to a process that inputs a type of the external shape of the workpiece W. On the input screen 60A, the workpiece registration guiding portion 27 highlights the display frame 62a. Highlighting the display frame 62a means displaying the display frame 62a noticeably, including displaying an inside of the display frame 62a in a color different from an inside of any of the other display frames 62b to 62d. The workpiece registration guiding portion 27 may display the inside of the display frame 62a more brightly than the inside of any of the other display frames 62b to 62d.

The plurality of shape selection buttons 64 are buttons to select a type of the external shape of the workpiece W. For example, a rectangular, circular, oval shape, or similar shape is assigned to each of the plurality of shape selection buttons 64 on the input screen 60A. If the user touches any of the shape selection buttons 64, the shape assigned to the button is selected as the external shape of the workpiece W. The determination button 65 is a button for determining an input content.

The user is promoted by the input screen 60A to touch any of the shape selection buttons 64, and then touches the determination button 65. This allows the workpiece registration guiding portion 27 to acquire the type of the external shape of the workpiece W. The workpiece registration guiding portion 27 may highlight the shape selection button 64 and the determination button 65 to prompt an input operation to the input screen 60A.

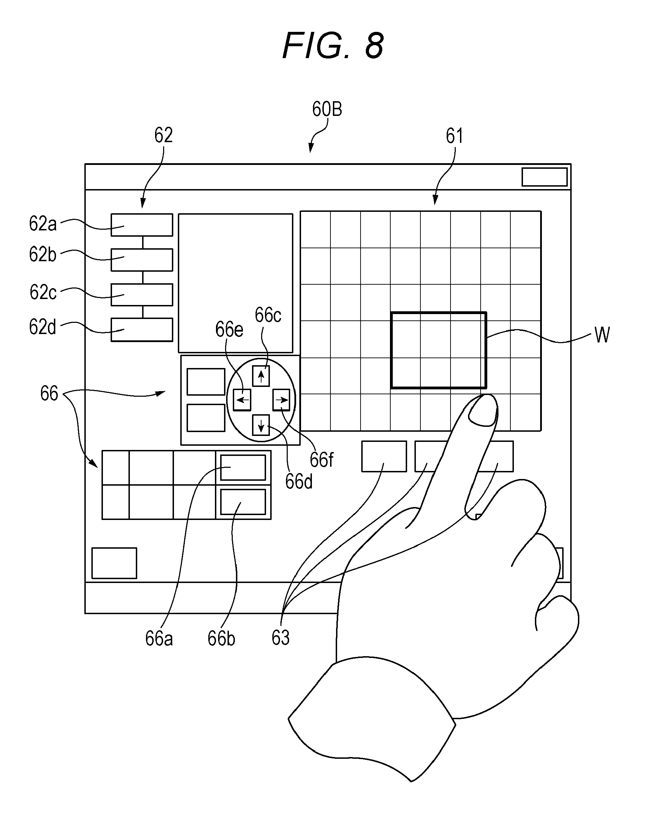

Following the input screen 60A, the workpiece registration guiding portion 27 displays the input screen 60B, which is illustrated in Fig. 8, on the touchscreen panel 22. The input screen 60B is a screen to input an external shape and size of the workpiece W. Similarly to the input screen 60A, the input screen 60B contains the workpiece display section 61, the flow display section 62, the zoom button 63, and the determination button 65. Additionally, the input screen 60B contains a drawing tool 66. The display frame 62b at the flow display section 62 corresponds to a process to input an external shape and size of the workpiece W. The workpiece registration guiding portion 27 highlights the display frame 62b on the input screen 60B. The workpiece W in Fig. 8 is enlarged by the zoom button 63, compared with the workpiece W illustrated in Fig. 7.

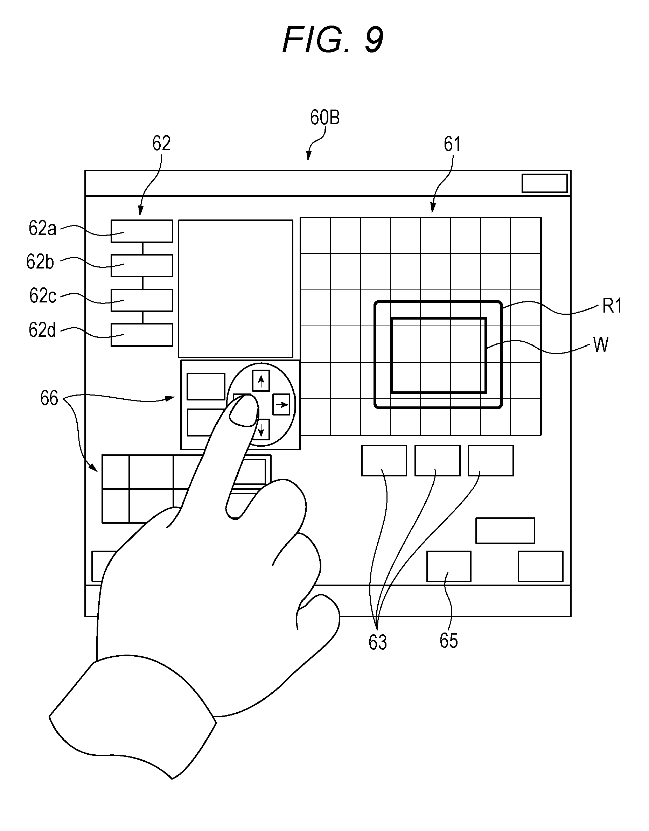

The drawing tool 66 includes two specific point specification buttons 66a and 66b, and four adjustment buttons 66c, 66d, 66e, and 66f. The specific point specification buttons 66a and 66b are buttons for inputting a point that specifies a range of an external shape of the workpiece W. The user can specify a specific point at the workpiece display section 61 by touching the specific point specification buttons 66a and 66b. If the external shape of the workpiece W is rectangular, the specific points are, for example, two points at an opposite angle. The user specifies a first point at the workpiece display section 61 after touching the specific point specification button 66a. Then, the user specifies a second point at the workpiece display section 61 after touching the specific point specification button 66b. Thus, two specific points are specified. Based on the specified specific points, the workpiece registration guiding portion 27 draws a workpiece-surrounding graphic shape R1 along a peripheral edge of the workpiece W at the workpiece display section 61 in overlap with an image of the workpiece W (see Fig. 9).

The adjustment buttons 66c, 66d, 66e, and 66f are buttons for moving the specific point up, down, to the right, and to the left, respectively. The adjustment buttons 66c, 66d, 66e, and 66f serve as buttons for adjusting a position of the first point while the specific point specification button 66a is selected, and serve as buttons for adjusting a position of the second point while the specific point specification button 66b is selected. The user adjusts the position of each specific point with the adjustment buttons 66c, 66d, 66e, and 66f. Thus, the user can move the workpiece-surrounding graphic shape R1 further closer to the peripheral edge of the workpiece W.

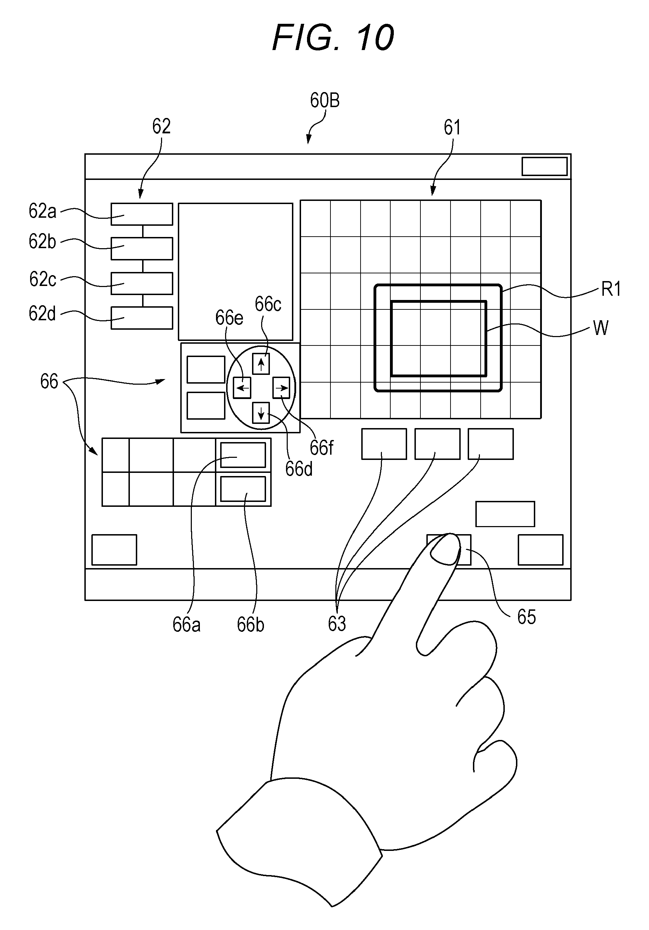

As mentioned, the user is prompted by the input screen 60B to draw a workpiece-surrounding graphic shape R1. When the user touches the determination button 65 afterwards (see Fig. 10), the workpiece registration guiding portion 27 acquires the shape and size of the workpiece-surrounding graphic shape R1 as the external shape and size of the workpiece W. The workpiece registration guiding portion 27 may highlight the specific point specification buttons 66a and 66b, the adjustment buttons 66c, 66d, 66e, and 66f, and the determination button 65 to prompt an input operation to the input screen 60B.

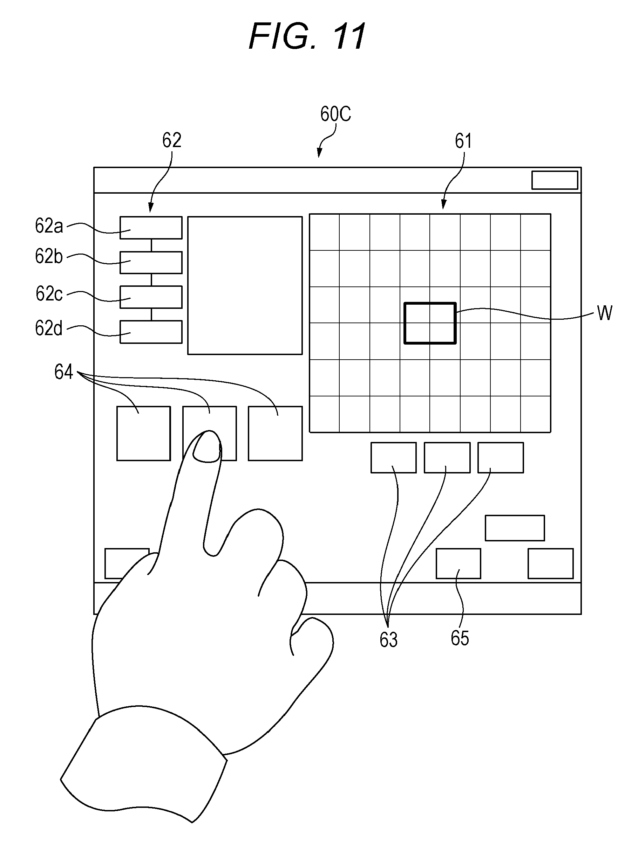

Then the image processing apparatus U1 acquires information on a feature portion of the workpiece W, as illustrated in Fig. 3 (S19). When acquiring the information on the feature portion of the workpiece W, the workpiece registration guiding portion 27 displays an input screen 60C, which is illustrated in Fig. 11, on the touchscreen panel 22.

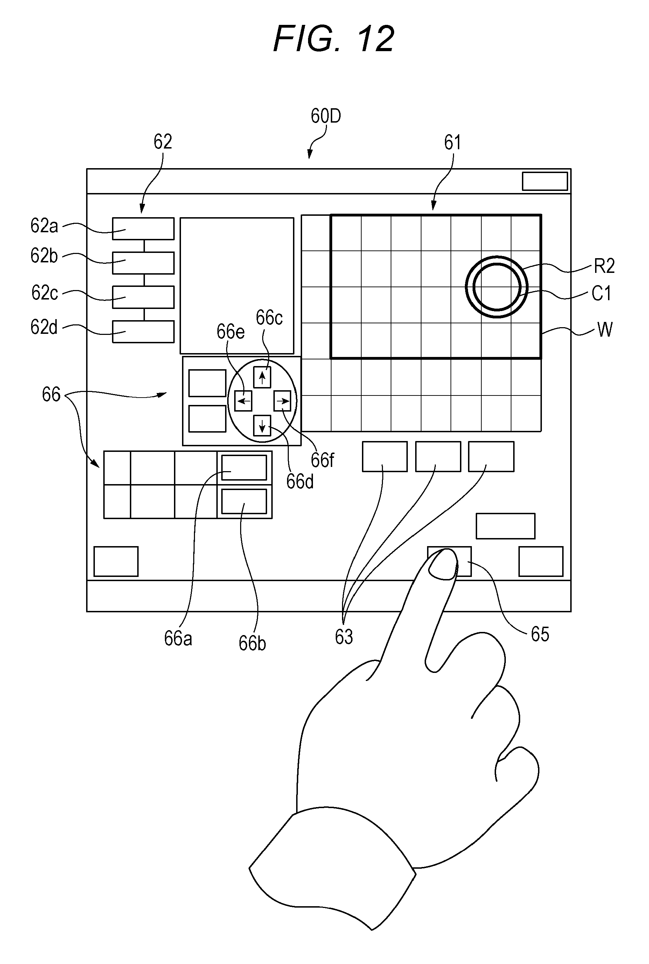

The input screen 60C is a screen to input a type of the shape of a feature portion C1 (see Fig. 12). Similarly to the input screen 60A, the input screen 60C contains the workpiece display section 61, the flow display section 62, the zoom button 63, a shape selection button 64, and the determination button 65. The display frame 62c at the flow display section 62 corresponds to a process to input information on a feature portion. The workpiece registration guiding portion 27 highlights the display frame 62c on the input screen 60C.

For example, a rectangular, circular, oval shape, or similar shape is assigned to each of the plurality of shape selection buttons 64 on the input screen 60C as well. If a user touches any of the shape selection buttons 64, the shape assigned to the button is selected as the shape of the feature portion C1.

The user is promoted by the input screen 60C to touch any of the shape selection buttons 64, and then touches the determination button 65. This allows the workpiece registration guiding portion 27 to acquire the shape type of the feature portion C1. The workpiece registration guiding portion 27 may highlight the shape selection button 64 and the determination button 65 to prompt an input operation to the input screen 60C.

Following the input screen 60C, the workpiece registration guiding portion 27 displays an input screen 60D, which is illustrated in Fig. 12, on the touchscreen panel 22. The input screen 60D is a screen to input a shape and size of the feature portion C1 and a position of the feature portion C1 within the workpiece W. Similarly to the input screen 60B, the input screen 60D contains the workpiece display section 61, the flow display section 62, the zoom button 63, the determination button 65, and the drawing tool 66. The workpiece registration guiding portion 27 highlights the display frame 62c on the input screen 60D as well. The workpiece W in Fig. 12 is enlarged by the zoom button 63, compared with the workpiece W in Fig. 11.

The user can specify a specific point with the specific point specification buttons 66a and 66b on the input screen 60D as well. Based on the specified specific points, the workpiece registration guiding portion 27 draws a feature-portion-surrounding graphic shape R2 along a peripheral edge of the feature portion C1 at the workpiece display section 61 in overlap with an image of the workpiece W. The user adjusts the position of the specific point with the adjustment buttons 66c, 66d, 66e, and 66f. Thus, the user can make the feature-portion-surrounding graphic shape R2 further close to the peripheral edge of the feature portion C1.

As mentioned, the user is prompted by the input screen 60D to draw the feature-portion-surrounding graphic shape R2. When the user touches the determination button 65 afterwards, the workpiece registration guiding portion 27 acquires the shape and size of the feature-portion-surrounding graphic shape R2 as the shape and size of the feature portion C1. In addition, the workpiece registration guiding portion 27 acquires the position of the feature-portion-surrounding graphic shape R2 within the workpiece-surrounding graphic shape R1 as the position of the feature portion C1 within the workpiece W. The workpiece registration guiding portion 27 may highlight the specific point specification buttons 66a and 66b, the adjustment buttons 66c, 66d, 66e, and 66f, and the determination button 65 to prompt an input operation to the input screen 60D.

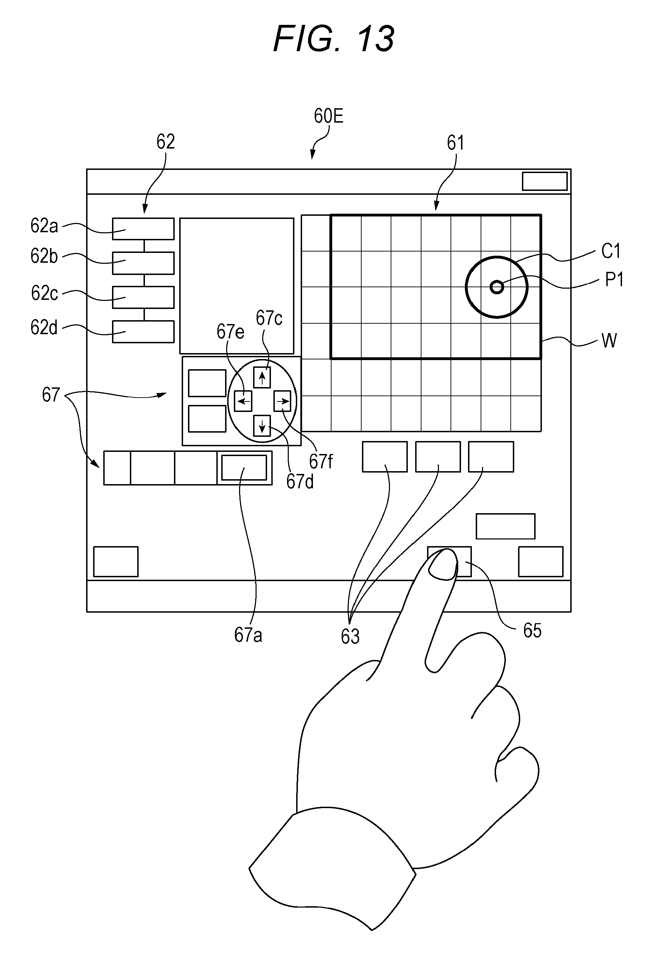

Then, the image processing apparatus U1 acquires reference-point information, as illustrated in Fig. 3 (S21). When acquiring the reference-point information, the workpiece registration guiding portion 27 displays an input screen 60E, which is illustrated in Fig. 13, on the touchscreen panel 22.

The input screen 60E is a screen to input the position of the reference point within the workpiece W. Similarly to the input screen 60B, the input screen 60E contains the workpiece display section 61, the flow display section 62, the zoom button 63, and the determination button 65. Additionally, the input screen 60E contains a drawing tool 67. A display frame 62d at the flow display section 62 corresponds to an input of reference-point information. The workpiece registration guiding portion 27 highlights the display frame 62d on the input screen 60E.

The drawing tool 67 contains a candidate-point specification button 67a and adjustment buttons 67c, 67d, 67e, and 67f. The candidate-point specification button 67a is a button for inputting a candidate point for a reference point. The user can specify a candidate point for a reference point on the workpiece display section 61 by touching the candidate-point specification button 67a. The workpiece registration guiding portion 27 draws a specified candidate point P1 on the workpiece display section 61 in overlap with an image of the workpiece W.

The adjustment buttons 67c, 67d, 67e, and 67f are buttons for moving the candidate point up, down, to the right, and to the left, respectively. The user can move the candidate point closer to a target position with the adjustment buttons 67c, 67d, 67e, and 67f.

As mentioned, the user is prompted by the input screen 60E to draw the candidate point P1. When the user touches the determination button 65 afterwards, the workpiece registration guiding portion 27 acquires the position of the candidate point P1 within the workpiece-surrounding graphic shape R1 as the position of the reference point within the workpiece W. The workpiece registration guiding portion 27 may highlight the candidate-point specification button 67a, the adjustment buttons 67c, 67d, 67e and 67f, and the determination button 65 to prompt an input operation to the input screen 60E.

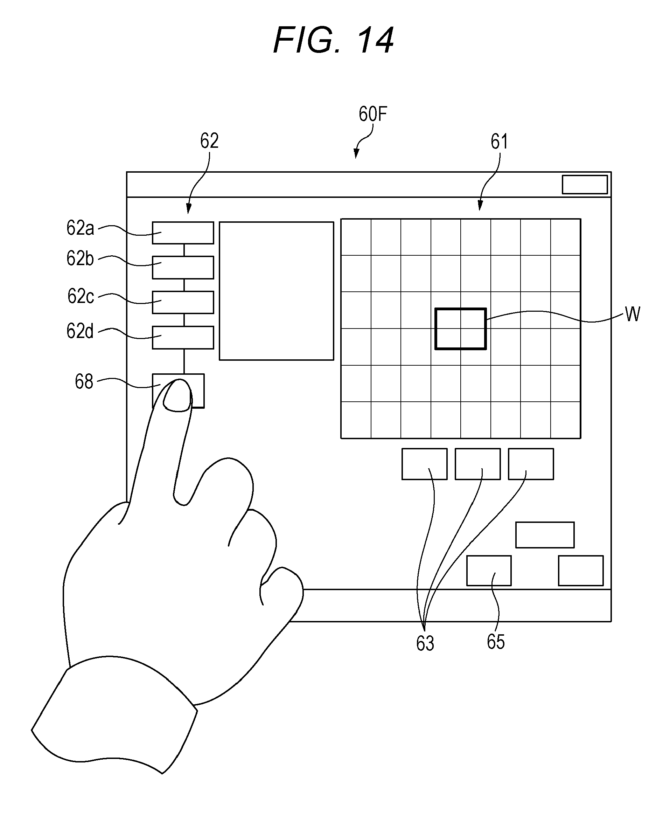

Then, the image processing apparatus U1 registers an image recognition program for the workpiece W, as illustrated in Fig. 3 (S22). When registering the image recognition program, the workpiece registration guiding portion 27 displays an input screen 60F, which is illustrated in Fig. 14, on the touchscreen panel 22.

Similarly to the input screen 60A, the input screen 60F contains the workpiece display section 61, the flow display section 62, the zoom button 63, and the determination button 65. Additionally, the input screen 60F contains a completion button 68. The completion button 68 is a button for completing parameter input. The completion button 68 continues with the display frame 62d of the flow display section 62. The completion button 68 continues with the display frame 62d corresponding to an immediately previous process. This makes the completion button 68 easier to be viewed by a user.

As mentioned, the user is prompted by the input screen 60F to touch the completion button 68. In response, the registration portion 28 applies the above parameter acquired by the workpiece registration guiding portion 27 to the base program stored in the second storage unit 26. Thus, the registration portion 28 builds an image recognition program. The registration portion 28 registers the image recognition program in the first storage unit 23. Registration of the image recognition program of the workpiece W has been now completed. The workpiece registration guiding portion 27 may highlight the completion button 68 to prompt an input operation to the input screen 60F.

According to the above-described robot system 1, the parameter acquired by the workpiece registration guiding portion 27 is applied to the base program stored in the second storage unit 26. Thus, the image recognition program is built. Then the image recognition program is registered in the first storage unit 23. Thus, the user of the robot system 1 can register the image recognition program in the first storage unit 23 by inputting the parameter.

When the user inputs the parameter, the workpiece registration guiding portion 27 displays the plurality of input screens 60A to 60E, which prompt parameter input, one by one on the touchscreen panel 22. The workpiece registration guiding portion 27 displays a next input screen (switches an input screen) every time the parameter has been input. Thus, execution of input operations in accordance with the input screens 60A to 60E ensures that all the parameters are input. As a result, the user can easily register the image recognition program for the workpiece W.

The user can input an external shape and size of the workpiece W in accordance with the input screens 60A and 60B to draw the workpiece-surrounding graphic shape R1. The currently drawn workpiece-surrounding graphic shape R1 is displayed in overlap with the image of the workpiece W. This enables the user to adjust the shape and size of the workpiece-surrounding graphic shape R1 in accordance with the image of the workpiece W. As a result, the user can easily draw the workpiece-surrounding graphic shape R1. Thus, the user can easily input the external shape and size of the workpiece W. This enables the user to register the image recognition program for the workpiece W even more easily.

The user can input a shape and size of the feature portion C1 and a position of the feature portion C1 within the workpiece W in accordance with the input screens 60C and 60D to draw a feature-portion-surrounding graphic shape. The currently drawn feature-portion-surrounding graphic shape R2 is displayed in overlap with an image of the workpiece W. This enables the user to adjust the shape of the feature-portion-surrounding graphic shape R2 in accordance with the image of the feature portion C1. As a result, the user can easily draw the feature-portion-surrounding graphic shape R2. Thus, the user can easily input the shape and size of the feature portion C1 and the position of the feature portion C1 within the workpiece W. This enables the user to register the image recognition program for the workpiece W even more easily.

The user can input a reference point within the workpiece W in accordance with the input screen 60E to specify a candidate point for a reference point. A candidate point P1 is displayed in overlap with the image of the workpiece W. This enables the user to adjust the position of the candidate point P1 in accordance with the image of the workpiece W. As a result, the user can easily indicate the candidate point P1. Thus, the user can easily input the position of the reference point within the workpiece W. This enables the user to register the image recognition program for the workpiece W even more easily.

The robot system 1 further includes the switch 21a, which switches the robot arm 10 between the operation allowed state and the operation prohibited state. The image processing apparatus U1 disables the touchscreen panel 22 while the switch 21a holds the robot arm 10 in the operation allowed state. Meanwhile the image processing apparatus U1 enables the touchscreen panel 22 while the switch 21a holds the robot arm 10 in the operation prohibited state. This enables the user to register the image recognition program for the workpiece W more safely.

The preferred embodiments of this disclosure have been described above. This disclosure is not limited to the above-described embodiments. Various changes of this disclosure may be made without departing from the spirit and scope of this disclosure. For example, the robot controller 20 does not have to be integrated as illustrated in Fig. 2. For example, the robot controller 20 may be separated into a control unit of the robot arm 10, an image processing unit, and a programmable logic controller (PLC) that couples these units. In this case, the image processing unit constitutes the image processing apparatus U1.

In this embodiment, the workpiece registration guiding portion 27 displays a plurality of input screens, which prompt parameter input, one by one on the touchscreen panel 22, and displays a next input screen every time the parameter input has been completed on one of the input screens. In addition, the workpiece registration guiding portion 27 may display several input screens (two, for example) simultaneously on the touchscreen panel 22. The workpiece registration guiding portion 27 may then delete from the touchscreen panel 22 the input screen on which the parameter input has been completed and display a new input screen.

In this embodiment again, the robot system 1 includes the robot arm 10. In addition, the robot system 1 may include a workpiece processing tool other than the robot arm 10. Furthermore, the robot system 1 may be used in combination with another device including the workpiece processing tool. In this case, the robot system 1 may not include the workpiece processing tool.

Even further, the robot system 1 may be used in combination with another device including the camera 40, which can photograph the workpiece W. In this case, the robot system 1 may not include the camera 40.

In addition, the robot system according to one embodiment of this disclosure may be any of the following first to fifth robot systems.

The first robot system includes a robot arm, a camera mounted to photograph a workpiece, a touchscreen panel, and an image processing apparatus configured to recognize the workpiece in an image photographed by the camera in accordance with an image recognition program. The image processing apparatus includes: a storage unit for a base program that serves as the image recognition program by inputting a plurality of parameters regarding the workpiece; a workpiece registration guiding portion configured to display a plurality of input screens to prompt parameter input one by one, and sequentially acquires all the parameters from the touchscreen panel by switching to a next input screen every time the parameter has been input on the one input screen, and a registration portion that builds and registers the image recognition program by applying the parameters acquired by the workpiece registration guiding portion to the base program in the storage unit.

In the second robot system according to the first robot system, the parameters include an external shape and size of the workpiece. The workpiece registration guiding portion displays a screen that contains an image of the workpiece photographed by the camera and a drawing tool for drawing a workpiece-surrounding graphic shape along a peripheral edge of the workpiece as the input screen on the touchscreen panel, displays the currently drawn workpiece-surrounding graphic shape on the touchscreen panel in overlap with the image of the workpiece, and acquires a shape and size of the workpiece-surrounding graphic shape as the external shape and size of the workpiece.

In the third robot system according to the second robot system, the parameters further include a shape and size of a feature portion for specifying a direction of the workpiece and a position of the feature portion within the workpiece. The workpiece registration guiding portion displays a screen that contains an image of the workpiece photographed by the camera and a drawing tool for drawing a feature-portion-surrounding graphic shape along a peripheral edge of the feature portion as the input screen on the touchscreen panel, displays the currently drawn feature-portion-surrounding graphic shape on the touchscreen panel in overlap with the image of the workpiece, acquires a shape and size of the feature-portion-surrounding graphic shape as the shape and size of the feature portion, and acquires a position of the feature-portion-surrounding graphic shape within the workpiece-surrounding graphic shape as the position of the feature portion within the workpiece.

In the fourth robot system according to the second or third robot system, the parameters further include a position of a reference point within the workpiece. The reference point serves as a reference when the robot arm operates on the workpiece. The workpiece registration guiding portion displays a screen that contains an image of the workpiece photographed by the camera and a drawing tool for drawing a candidate point for the reference point as the input screen on the touchscreen panel, displays the candidate point on the touchscreen panel in overlap with the image of the workpiece, and acquires a position of the candidate point within the workpiece-surrounding graphic shape as the position of the reference point within the workpiece.

The fifth robot system further includes a switch that switches the robot arm between an operation allowed state and an operation prohibited state in any of the first to fourth robot systems. The image processing apparatus disables the touchscreen panel while the switch holds the robot arm in the operation allowed state, and enables the touchscreen panel while the switch holds the robot arm in the operation prohibited state.

With the first to fifth robot systems, the image recognition program for the workpiece can be easily registered.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A robot system (1) comprising:
a touchscreen panel (22); and
an image processing apparatus (U1) configured to recognize a workpiece in an image of the workpiece (W) acquired by photography, in accordance with a registered image recognition program,
wherein the image processing apparatus includes:
a storage unit (26) configured to store a base program serving as the image recognition program by inputting a plurality of parameters regarding the workpiece,
a workpiece registration guiding portion (27) configured to display an input screen to prompt input of the parameters on the touchscreen panel and acquire the parameters via the touchscreen panel, and
a registration portion configured to build and register the image recognition program by applying the parameters acquired by the workpiece registration guiding portion to the base program in the storage unit.

2. The robot system according to claim 1,
wherein the workpiece registration guiding portion displays a plurality of input screens to prompt input of the parameters one by one on the touchscreen panel, and displays a next one of the input screens every time the parameter has been input on one of the input screens.

3. The robot system according to claim 2,
wherein the parameters include an external shape and size of the workpiece,
the workpiece registration guiding portion is configured to:
display a screen (60B) containing an image of the workpiece and a drawing tool for drawing a workpiece-surrounding graphic shape (R1) along a peripheral edge of the workpiece, as the input screen on the touchscreen panel,
display the currently drawn workpiece-surrounding graphic shape on the touchscreen panel in overlap with the image of the workpiece, and
acquire a shape and size of the workpiece-surrounding graphic shape as the external shape and size of the workpiece.

4. The robot system according to claim 3, wherein
the parameters further includes a shape and size of a feature portion for specifying a direction of the workpiece and a position of the feature portion within the workpiece, and
the workpiece registration guiding portion is configured to:
display a screen (60D) containing the image of the workpiece and a drawing tool for drawing a feature-portion-surrounding graphic shape (R2) along a peripheral edge of the feature portion as the input screen on the touchscreen panel,
display the currently drawn feature-portion-surrounding graphic shape on the touchscreen panel in overlap with the image of the workpiece,
acquire a shape and size of the feature-portion-surrounding graphic shape as the shape and size of the feature portion, and
acquire a position of the feature-portion-surrounding graphic shape within the workpiece-surrounding graphic shape as the position of the feature portion within the workpiece.

5. The robot system according to claim 3 or 4,
wherein the parameters further include a position of a reference point within the workpiece, the reference point serving as a reference for a work on the workpiece, and
the workpiece registration guiding portion is configured to:
display a screen (60E) containing the image of the workpiece and a drawing tool for drawing a candidate point (P1) for the reference point as the input screen on the touchscreen panel,
display the candidate point on the touchscreen panel in overlap with the image of the workpiece, and
acquire a position of the candidate point within the workpiece-surrounding graphic shape as the reference point within the workpiece.

6. The robot system according to any one of claims 1 to 5, further comprising:
a robot arm (10); and
a switch (21a) configured to switch the robot arm between an operation allowed state and an operation prohibited state,
wherein the image processing apparatus is configured to:
disable the touchscreen panel while the switch holds the robot arm in the operation allowed state, and
enable the touchscreen panel while the switch holds the robot arm in the operation prohibited state.

7. The robot system according to claim 1, further comprising
a camera (40) configured to acquire an image of the workpiece by photographing the workpiece.

8. An image processing method comprising:
displaying an input screen to prompt input of a plurality of parameters regarding a workpiece (W) on a touchscreen panel (22), and acquiring the parameters via the touchscreen panel;
building and registering an image recognition program by applying the acquired parameters to a base program; and
recognizing a workpiece in the image of the workpiece acquired by photography in accordance with the registered image recognition program.
